# FASCICULE DE BREVET EUROPEEN

(11) **EP 1 302 386 B1**
(45) Date de publication et mention de la délivrance du brevet: **04.08.2004**
(21) Numéro de dépôt: 02356200.2
(22) Date de dépôt: 10.10.2002
(51) Int. Cl.: B62D 5/04, B62D 5/22, B62D 3/12

(54) **Direction à assistance électrique pour véhicule automobile**
Elektrische Servolenkung für Kraftfahrzeuge
Electric power steering for automotive vehicles

(30) Priorité: 11.10.2001 FR 0113121
(43) Date de publication de la demande: 16.04.2003
(73) Titulaire: Société de Mécanique d'Irigny, 69540 Irigny (FR)
(72) Inventeur: Guillard, Grégory, 69500 Bron (FR); Gambert, Rémy, 69390 Charly (FR)
(74) Mandataire: Bratel, Gérard

(56) Documents cités:
- DE-A- 2 032 485
- DE-A- 3 628 886
- DE-A- 10 010 838
- DE-A- 19 917 392
- US-A- 3 927 576
- US-A- 5 878 832

## Description

La présente invention concerne, de façon générale, les systèmes de direction pour véhicules automobiles. Elle se rapporte, plus particulièrement, aux directions à crémaillère, pourvues d'un dispositif d'assistance électrique agissant au niveau du pignon de direction qui vient en prise avec la crémaillère, ou agissant directement sur la crémaillère, comme divulgué dans le document US 5878832. Encore plus spécialement, l'invention s'intéresse à un dispositif qui, pour ce genre de direction assistée, assure un équilibrage entre les pressions d'air à l'intérieur de la direction et à l'extérieur de celle-ci.

Une direction à crémaillère de véhicule automobile est habituellement réalisée de façon totalement étanche, afin d'éviter toute entrée indésirable d'eau ou d'humidité à l'intérieur de la direction.

Dans le cas particulier d'une direction à assistance électrique, un joint torique est actuellement placé entre la barre de torsion et l'axe d'entrée du mouvement (lié à la colonne de direction), afin d'éviter l'entrée d'eau ou de particules solides dans l'espace situé entre le sommet de la barre de torsion et l'axe d'entrée, ce joint assurant l'étanchéité totale.

Ceci pose toutefois des problèmes de surpression ou de dépression dans la direction, en fonction de l'augmentation ou de la baisse de température environnante, la surpression ou dépression entraînant une déformation exagérée des soufflets de la direction, situés autour des extrémités de la crémaillère, avec pour conséquence une détérioration ou une destruction de ces soufflets.

Certes, il a été déjà envisagé de réaliser des directions avec soufflets "respirants", qui permettent l'entrée ou la sortie d'air. A titre d'exemples, on peut ici se référer aux documents US 3927576A, DE 2032485A et DE 19917392A. Toutefois, cette solution nécessite une fabrication spéciale, donc complexe et coûteuse, des soufflets.

La présente invention a pour but de fournir une direction à assistance électrique, comme celle de US 5878832A, avec dispositif d'équilibrage des pressions entre l'intérieur et l'extérieur de la direction, en vue d'éviter la déformation et la détérioration des soufflets, ce dispositif étant obtenu par une simple adaptation de la structure de la direction assistée, dans la région de la barre de torsion et de l'axe d'entrée du mouvement.

A cet effet, l'invention a pour objet une direction à crémaillère à assistance électrique pour véhicule automobile, comprenant un moteur électrique d'assistance agissant au niveau du pignon de direction qui vient en prise avec la crémaillère, ou agissant directement sur la crémaillère, et comprenant une barre de torsion intercalée entre ledit pignon et un axe d'entrée du mouvement, lui-même lié à la colonne de direction, l'axe d'entrée possédant un alésage central qui reçoit la portion de la barre de torsion liée à l'axe d'entrée, cette direction étant essentiellement caractérisée en ce que :
- d'une part, une communication autorisant une circulation de l'air entre l'intérieur et l'extérieur de la direction est réalisée entre la barre de torsion et l'axe d'entrée du mouvement, dans la zone de liaison de ces deux pièces, et
- d'autre part, l'alésage central de l'axe d'entrée du mouvement reçoit, au-dessus du sommet de la barre de torsion, un élément d'obturation réalisé, au moins partiellement, en une matière perméable à l'air mais hydrophobe,
pour permettre l'équilibrage des pressions entre l'intérieur et l'extérieur de la direction, et éviter ainsi la déformation des soufflets de cette direction.

Ainsi, l'idée à la base de l'invention consiste à supprimer le joint totalement étanche à l'eau et à l'air, habituellement placé entre la barre de torsion et l'axe d'entrée, de manière à créer une communication entre l'intérieur et l'extérieur de la direction, au niveau de la zone de liaison entre la barre de torsion et l'axe d'entrée, tout en obturant l'alésage de cet axe d'entrée, au-dessus de la barre de torsion, par un élément perméable à l'air mais hydrophobe. La direction assistée électrique est ainsi rendue "respirante" (en mettant aussi à profit la communication habituellement existante entre ses deux soufflets), tout en restant étanche à l'eau et aux particules solides.

Selon le mode de réalisation de la communication réalisée entre la barre de torsion et l'axe d'entrée du mouvement, pour permettre une circulation d'air entre l'intérieur et l'extérieur de la direction, il est possible d'obtenir diverses formes de réalisation de l'invention.

Dans la forme de réalisation la plus simple, la communication réalisée entre la barre de torsion et l'axe d'entrée du mouvement résulte d'un jeu annulaire, ménagé entre la tête de barre de torsion et la paroi de l'alésage central de l'axe d'entrée. La communication par ce jeu annulaire peut être obtenue par simple suppression du joint torique habituel. Toutefois, cette solution peut s'avérer insuffisante, car l'état de surface et l'ajustement des deux pièces considérées risque de bloquer le passage de l'air.

Pour éviter cette difficulté, donc pour faciliter la circulation de l'air entre l'intérieur et l'extérieur de la direction, une autre solution consiste à réaliser la communication entre la barre de torsion et l'axe d'entrée du mouvement par au moins une rainure ménagée dans la tête de la barre de torsion et/ou dans la paroi de l'alésage central de l'axe d'entrée.

Selon une forme de réalisation particulière, au moins une rainure longitudinale droite est ménagée dans la tête de la barre de tension, cette rainure délimitant, avec la portion adjacente de paroi de l'alésage central de l'axe d'entrée, un canal de communication rectiligne entre l'intérieur et l'extérieur de la direction.

Selon une autre forme de réalisation envisageable, au moins une rainure hélicoïdale est ménagée dans la tête de la barre de torsion, cette rainure délimitant, avec la portion adjacente de paroi de l'alésage central de l'axe d'entrée, un canal de communication hélicoïdal entre l'intérieur et l'extérieur de la direction.

Quant à l'élément d'obturation en matière perméable à l'air mais hydrophobe, celui-ci est avantageusement constitué par une pastille ou un tampon en matière poreuse, adapté dans l'alésage central de l'axe d'entrée du mouvement, au-dessus de la tête de la barre de torsion. Plus particulièrement, la pastille ou le tampon est réalisable en polytétrafluoréthylène poreux, toute autre matière équivalente étant aussi utilisable.

L'invention sera mieux comprise à l'aide de la description qui suit, en référence au dessin schématique annexé représentant, à titre d'exemples, quelques formes d'exécution de cette direction à assistance électrique pour véhicule automobile.
Figure 1 est une vue générale, extérieure, d'une direction assistée électrique conforme à l'invention ;
Figure 2 est une vue de détail, partiellement en coupe, passant par la barre de torsion et l'axe d'entrée, et représentant une première forme de réalisation de l'invention ;
Figure 3 est une vue similaire à la figure 2, illustrant une deuxième forme de réalisation de l'invention ;
Figure 4 est une autre vue similaire aux précédentes, illustrant une troisième forme de réalisation de l'invention.

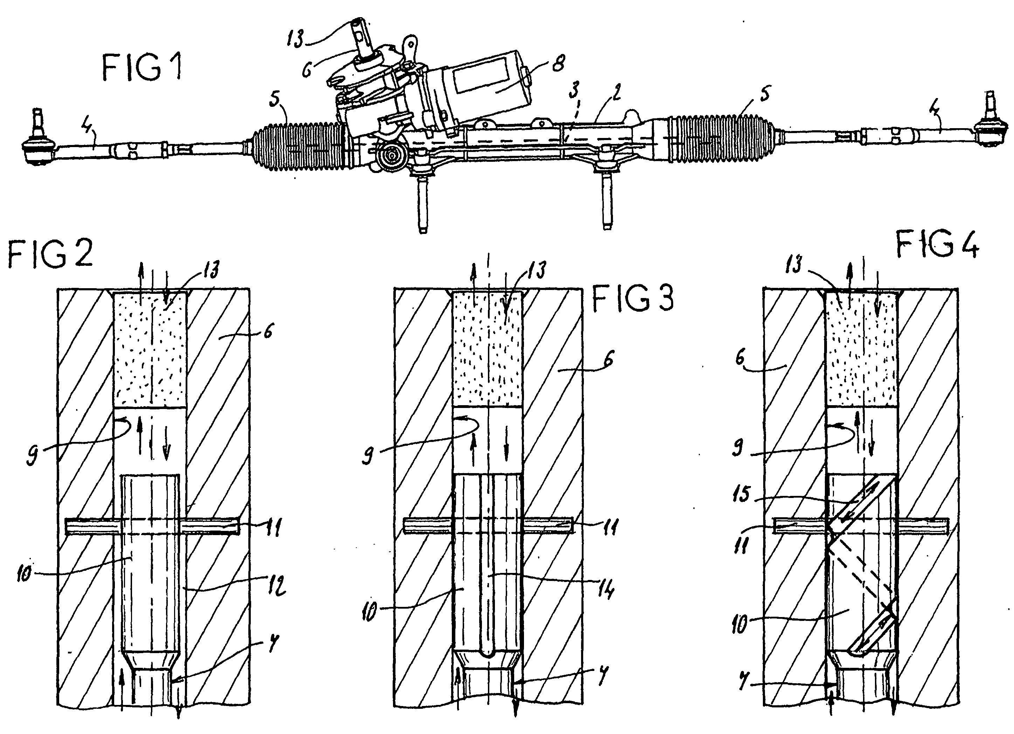

La figure 1 représente extérieurement une direction à crémaillère, et plus particulièrement une direction assistée électrique. Cette figure montre le carter central tubulaire 2 de la direction assistée, dans lequel est montée coulissante la crémaillère 3. Les extrémités droite et gauche de la crémaillère 3, extérieures au carter 2, sont accouplées respectivement à des biellettes 4. Deux soufflets 5, raccordés respectivement aux deux extrémités du carter 2, recouvrent et protègent les zones d'extrémité de la crémaillère 3.

La crémaillère 3 est en prise avec un pignon de direction (non représenté), lié en rotation à un axe d'entrée du mouvement 6 par l'intermédiaire d'une barre de torsion 7 (voir aussi les figures 2 et suivantes). L'axe d'entrée 6 est lui-même lié en rotation à une colonne de direction avec volant de conduite, non représentée.

S'agissant ici d'une direction assistée électrique, celle-ci comprend encore un moteur électrique d'assistance 8, qui par l'intermédiaire d'une transmission mécanique agit ici au niveau du pignon de direction, d'une manière connue en soi.

Les figures 2, 3 et 4 montrent, plus en détail, la zone de liaison entre l'axe d'entrée 6 et la barre de torsion 7. De manière également connue en soi, l'axe d'entrée 6 possède une configuration tubulaire, avec un alésage central 9. La barre de torsion 7 possède, à son sommet, une tête élargie 10 qui est située dans l'alésage central 9 de l'axe d'entrée 6. Une goupille transversale 11 assure une liaison en rotation entre l'axe d'entrée 6 et la tête 10 de la barre de torsion 7.

Dans le mode de réalisation de la figure 2, un jeu annulaire 12 est ménagé entre la tête 10 de la barre de torsion 7, d'une part, et la paroi cylindrique de l'alésage central 9 de l'axe d'entrée 6, d'autre part. Comme l'indiquent les flèches, le jeu annulaire 12 crée une communication, qui permet une circulation d'air de l'intérieur vers l'extérieur de la direction assistée, ou inversement de l'extérieur vers l'intérieur de cette direction.

De plus, comme montré en partie supérieure de la figure 2, un élément d'obturation 13 tel qu'une pastille ou un tampon, en matière poreuse perméable à l'air mais hydrophobe, est mis en place dans l'alésage central 9 de l'axe d'entrée 6, au-dessus de la tête 10 de la barre de torsion 7.

Ainsi, le passage de l'air entre l'intérieur et l'extérieur de la direction est autorisé au travers du jeu annulaire 12 entre la tête 10 de la barre de torsion 7 et la paroi de l'alésage 9, et au travers de l'élément d'obturation 13, tandis que ce même élément 13 s'oppose à l'entrée d'eau ou de particules solides à l'intérieur de la direction.

Selon les variations de température, l'air peut donc sortir de la direction ou y rentrer, de manière à équilibrer la pression entre l'intérieur de cette direction et l'extérieur, afin d'éviter la déformation des soufflets 5 et leur détérioration, notamment lorsque la température environnante augmente ou baisse fortement, le passage de l'eau et de l'humidité étant toutefois évité par l'élément d'obturation 13.

La figure 3 montre une autre forme de réalisation, les éléments correspondant à ceux précédemment décrits y étant désignés par les mêmes repères que sur la figure 2. Il n'est ici prévu aucun jeu particulier entre la tête 10 de la barre de torsion 7 et la paroi de l'alésage central 9 de l'élément d'entrée 6. Par contre, une rainure rectiligne longitudinale 14 est ménagée dans la tête 10 de la barre de torsion 7, sur toute la hauteur de cette tête 10. La rainure 14 délimite, avec la portion adjacente de la paroi de l'alésage 9, un canal qui permet de faire communiquer l'intérieur et l'extérieur de la direction. De plus, comme dans le mode de réalisation précédent, un élément d'obturation 13 en matière perméable à l'air, mais hydrophobe, est ici placé dans l'alésage central 9 de l'élément d'entrée 6, au-dessus de la tête 10 de la barre de torsion 7. Ainsi, le fonctionnement d'ensemble reste le même, le passage d'air étant autorisé par le canal de communication résultant de la rainure 14, et par l'élément d'obturation 13 qui, par ailleurs, interdit toute entrée d'eau ou de particules.

Enfin, la figure 4 illustre une variante du mode de réalisation précédent. Dans la tête 10 de la barre de torsion 7 est ici ménagée une rainure 15 de forme hélicoïdale, qui s'étend de la base de la tête 10 jusqu'à son sommet Cette rainure 15 délimite, avec la portion adjacente de la paroi de l'alésage central 9 de l'axe d'entrée 6, un canal lui-même hélicoïdal, permettant la communication entre l'intérieur et l'extérieur de la direction. De plus, comme précédemment, un élément d'obturation 13 en matière perméable à l'air, mais hydrophobe, est mis en place dans l'alésage 9, au-dessus de la tête 10. Le fonctionnement d'ensemble est similaire à celui de la forme de réalisation précédente, le canal de communication hélicoïdal qui résulte de la rainure 15 jouant le même rôle que le canal rectiligne de la figure 3.

Dans tous les cas, la matière constitutive de l'élément d'obturation 13, perméable à l'air mais hydrophobe, peut être une résine polymérique fluorée poreuse, telle que celle commercialisée sous la dénomination « PERMEON » (marque enregistrée), ou toute autre matière équivalente.

L'on ne s'éloignerait pas du cadre de l'invention, telle que définie dans les revendications annexées :
- en donnant une autre forme aux rainures ménagées dans la tête de la barre de torsion, ou en prévoyant sur cette tête deux ou plusieurs rainures ;
- en creusant une ou des rainures dans la paroi de l'alésage de l'axe d'entrée, au lieu de la tête de la barre de torsion, ce qui constituerait une solution équivalente dans la mesure où la ou les rainures conservent une fonction de mise en communication entre l'intérieur et l'extérieur de la direction ;
- en modifiant les détails de forme de l'élément d'obturation, et en fixant cet élément dans l'axe d'entrée par tout moyen approprié ;
- en choisissant d'autres matières appropriées pour la constitution de l'élement d'obturation ;
- en destinant le même dispositif à une direction assistée électrique différant, par ses détails constructifs, de celle visible sur la figure 1, en particulier une direction dans laquelle le moteur électrique d'assistance agirait directement sur la crémaillère.

## Revendications

1. Direction à crémaillère à assistance électrique pour véhicule automobile, comprenant un moteur électrique d'assistance (8) agissant au niveau du pignon de direction qui vient en prise avec la crémaillère (3), ou agissant directement sur la crémaillère (3), et comprenant une barre de torsion (7) intercalée entre ledit pignon et un axe d'entrée (6) du mouvement, lui-même lié à la colonne de direction, l'axe d'entrée (6) possédant un alésage central (9) qui reçoit la portion (10) de la barre de torsion (7) liée à l'axe d'entrée (6), **caractérisée en ce que** :
- d'une part, une communication (12 ; 14 ; 15) autorisant une circulation de l'air entre l'intérieur et l'extérieur de la direction est réalisée entre la barre de torsion (7) et l'axe d'entrée (6) du mouvement, dans la zone de liaison de ces deux pièces (6, 7), et
- d'autre part, l'alésage central (9) de l'axe d'entrée (6) du mouvement reçoit, au-dessus du sommet de la barre de torsion (7), un élément d'obturation (13) réalisé, au moins partiellement, en une matière perméable à l'air mais hydrophobe,
pour permettre l'équilibrage des pressions entre l'intérieur et l'extérieur de la direction, et éviter ainsi la déformation des soufflets (5) de cette direction.

2. Direction à assistance électrique selon la revendication 1, **caractérisée en ce que** la communication réalisée entre la barre de torsion (7) et l'axe d'entrée (6) du mouvement résulte d'un jeu annulaire (12), ménagé entre la tête (10) de la barre de torsion (7) et la paroi de l'alésage central (9) de l'axe d'entrée (6).

3. Direction à assistance électrique selon la revendication 1, **caractérisée en ce que** la communication, réalisée entre la barre de torsion (7) et l'axe d'entrée (6) du mouvement, résulte d'au moins une rainure (14; 15) ménagée dans la tête (10) de la barre de torsion (7) et/ou dans la paroi de l'alésage central (9) de l'axe d'entrée (6).

4. Direction à assistance électrique selon la revendication 3, **caractérisée en ce qu'**au moins une rainure longitudinale droite (14) est ménagée dans la tête (10) de la barre de torsion (7), cette rainure (14) délimitant, avec la portion adjacente de paroi de l'alésage central (9) de l'axe d'entrée (6), un canal de communication rectiligne entre l'intérieur et l'extérieur de la direction.

5. Direction à assistance électrique selon la revendication 3, **caractérisée en ce qu'**au moins une rainure hélicoïdale (15) est ménagée dans la tête (10) de la barre de torsion (7), cette rainure (15) délimitant, avec la portion adjacente de la paroi de l'alésage central (9) de l'axe d'entrée (6), un canal de communication hélicoïdal entre l'intérieur et l'extérieur de la direction.

6. Direction à assistance électrique selon l'une quelconque des revendications 1 à 5, **caractérisée en ce que** l'élément d'obturation en matière perméable à l'air, mais hydrophobe, est constitué par une pastille ou un tampon (13) en matière poreuse, adapté dans l'alésage (9) de l'axe d'entrée (6) du mouvement, au-dessus de la tête (10) de la barre de torsion (7).

7. Direction à assistance électrique selon la revendication 6, **caractérisée en ce que** la pastille ou le tampon (13), constituant l'élément d'obturation, est réalisé en polytétrafluoréthylène poreux.

## Patentansprüche

1. Elektrisch unterstützte Zahnstangenlenkung für ein Kraftfahrzeug, der einen Servo-Elektromotor (8), der auf das mit der Zahnstange (3) in Eingriff stehende Lenkungsritzel einwirkt oder unmittelbar auf die Zahnstange (3) einwirkt, sowie einen Torsionsstab (7) aufweist, der zwischen das Ritzel und eine Bewegungs-Eintrittsachse (6) geschaltet ist, welche ihrerseits mit der Lenksäule verbunden ist, wobei die Eintrittsachse (6) eine Mittelbohrung (9) aufweist, die den mit der Eintrittsachse (6) verbundenen Teil (10) des Torsionsstabes (7) aufnimmt,
**dadurch gekennzeichnet, daß**:
- zum einen eine Verbindung (12; 14; 15), die eine Luftzirkulation zwischen dem Inneren und dem Äußeren der Lenkung ermöglicht, zwischen dem Torsionsstab (7) und der Bewegungs-Eintrittsachse (6) im Bereich der Verbindung dieser beiden Teile (6, 7) ausgebildet ist, und
- zum anderen die Mittelbohrung (9) der Bewegungs-Eintrittsachse (6) über dem Scheitelpunkt des Torsionsstabes (7) ein Verschlußelement (13) aufnimmt, das zumindest teilweise aus einem luftdurchlässigen, jedoch hydrophoben Material hergestellt ist,
um einen Ausgleich der Drücke zwischen dem Inneren und dem Äußeren der Lenkung zu ermöglichen und somit eine Verformung der Faltenbälge (5) dieser Lenkung zu verhindern.

2. Elektrisch unterstützte Lenkung nach Anspruch 1,
**dadurch gekennzeichnet,**
**daß** die zwischen dem Torsionsstab (7) und der Bewegungs-Eintrittsachse (6) ausgebildete Verbindung aus einem ringförmigen Spiel (12) resultiert, das zwischen dem Kopf (10) des Torsionsstabes (7) und der Wandung der Mittelbohrung (9) der Eintrittsachse (6) vorgesehen ist.

3. Elektrisch unterstützte Lenkung nach Anspruch 1,
**dadurch gekennzeichnet,**
**daß** die zwischen dem Torsionsstab (7) und der Bewegungs-Eintrittsachse (6) hergestellte Verbindung aus mindestens einer Nut (14; 15) resultiert, die in dem Kopf (10) des Torsionsstabes (7) und/oder in der Wandung der Mittelbohrung (9) der Eintrittsachse (6) vorgesehen ist.

4. Elektrisch unterstützte Lenkung nach Anspruch 3,
**dadurch gekennzeichnet,**
**daß** mindestens eine geradlinige Längsnut (14) in dem Kopf (10) des Torsionsstabes (7) ausgebildet ist, wobei diese Nut (14) mit dem benachbarten Teil der Wandung der Mittelbohrung (9) der Eintrittsachse (6) einen geradlinigen Verbindungskanal zwischen dem Inneren und dem Äußeren der Lenkung begrenzt.

5. Elektrisch unterstützte Lenkung nach Anspruch 3,
**dadurch gekennzeichnet,**
**daß** mindestens eine wendelförmige Nut (15) in dem Kopf (10) des Torsionsstabes (7) ausgebildet ist, wobei diese Nut (15) mit dem benachbarten Teil der Wandung der Mittelbohrung (9) der Eintrittsachse (6) einen wendelförmigen Verbindungskanal zwischen dem Inneren und dem Äußeren der Lenkung begrenzt.

6. Elektrisch unterstützte Lenkung nach einem der Ansprüche 1 bis 5,
**dadurch gekennzeichnet,**
**daß** das Verschlußelement aus einem luftdurchlässigen, jedoch hydrophoben Material aus einem Plättchen oder einem Stopfen (13) aus einem porösen Material besteht, das bzw. der über dem Kopf (10) des Torsionsstabes (7) in die Bohrung (9) der Bewegungs-Eintrittsachse (6) eingepaßt ist.

7. Elektrisch unterstützte Lenkung nach Anspruch 6,
**dadurch gekennzeichnet,**
**daß** das Plättchen oder der Stopfen (13), das bzw. der das Verschlußelement darstellt, aus porösem Polytetrafluorethylen hergestellt ist.

## Claims

1. An electric, power-assisted rack-and-pinion steering system for an automobile vehicle, comprising an electric power-assistance motor (8) which acts on the steering pinion which meshes with the rack (3) or which acts directly on the rack (3), and comprising a torque rod (7) inserted between said pinion and a movement input shaft (6) which itself is attached to the steering column, said input shaft (6) having a central bore (9) which receives the portion (10) of the torque rod (7) which is attached to the input shaft (6),
**characterised in that**
- firstly, a communication means (12; 14; 15) which enables air to circulate between the inside and the outside of the steering system is produced between the torque rod (7) and the movement input shaft (6) in the area of attachment of these two parts (6, 7), and
- secondly, above the top of the torque rod (7), the central bore (9) of the movement input shaft (6) receives a sealing element (13) which is made, at least in part, of a material which is permeable to air but which is water-repellent,
in order to permit equilibration of pressure between the inside and the outside of the steering system and in order thus to prevent deformation of the bellows (5) of said steering system.

2. An electric, power-assisted steering system according to claim 1, **characterised in that** the communication means produced between the torque rod (7) and the movement input shaft (6) results from an annular clearance (12) disposed between the top (10) of the torque rod (7) and the wall of the central bore (9) in the input shaft (6).

3. An electric, power-assisted steering system according to claim 1, **characterised in that** the communication means produced between the torque rod (7) and the movement input shaft (6) results from at least one groove (14; 15) disposed in the top (10) of the torque rod (7) and/or in the wall of the central bore (9) in the input shaft (6).

4. An electric, power-assisted steering system according to claim 3, **characterised in that** at least one straight, longitudinal groove (14) is disposed in the top (10) of the torque rod (7), said groove (14) delimiting, with the adjacent portion of the wall of the central bore (9) in the input shaft (6), a rectilinear communication channel between the inside and the outside of the steering system.

5. An electric, power-assisted steering system according to claim 3, **characterised in that** at least one helical groove (15) is disposed in the top (10) of the torque rod (7), said groove (14) delimiting, with the adjacent portion of the wall of the central bore (9) in the input shaft (6), a helical communication channel between the inside and the outside of the steering system.

6. An electric, power-assisted steering system according to any one of claims 1 to 5, **characterised in that** the sealing element, which is made of a material which is permeable to air but which is water-repellent, is formed by a pad or plug (13) made of a porous material which is fitted into the bore (9) in the movement input shaft (6) above the top (10) of the torque rod (7).

7. An electric, power-assisted steering system according to claim 6, **characterised in that** the pad or plug (13) which forms the sealing element is made of porous polytetrafluoroethylene.
